# EUROPEAN PATENT SPECIFICATION

(11) **EP 2 839 750 B1**
(45) Date of publication and mention of the grant of the patent: **03.01.2018**
(21) Application number: 13275192.6
(22) Date of filing: 22.08.2013
(51) Int. Cl.: A23D 9/00, A23D 9/02, C11C 3/10, C11B 7/00

(54) **Fat composition**
Fettzusammensetzung
Composition de graisse

(43) Date of publication of application: 25.02.2015
(73) Proprietor: LODERS CROKLAAN B.V., 1521 AZ Wormerveer (NL)
(72) Inventor: Bhaggan, Krishnadath, 1521 AZ Wormerveer (NL); Kos, Henry, 1521 AZ Wormerveer (NL); Werleman, Jeanine Luvelle, 1521 AZ Wormerveer (NL); Van Der Struik, Helga Gerda Adriana, 1521 AZ Wormerveer (NL)
(74) Representative: Potter Clarkson LLP

(56) References cited:
- EP-A1- 0 803 196
- WO-A2-2009/062663
- JP-A- 2008 228 610
- ISHIKAWA, H., ET AL.: "Polymorphic behavious of palm oil and modified palm oils", FOOD SCIENCE AND TECHNOLOGY INTERNATIONAL, TOKYO, vol. 3, no. 1, 1997, pages 77-81, XP002716821, ISSN: 1881-3976
- SCHÄFER, F.A., ET AL.: "Chemical interesterification of blends of palm stearin, coconut oil, and canola oil: physicochemical properties.", JOURNAL OF AGRICULTURAL AND FOOD CHEMISTRY., vol. 60, 2012, pages 1461-1469, XP002716822, USAMERICAN CHEMICAL SOCIETY. WASHINGTON. ISSN: 0021-8561

## Description

This invention relates to a fat composition, to a fat blend comprising the composition, and to confectionery products and the scope of the invention is defined by the claims. Triglyceride fats are used extensively in the confectionery industry. Many fats require a tempering step to convert the fat into the most stable crystalline form.

Chocolate is composed of triglycerides in unstable polymorphic crystal forms and has a tendency to undergo physical changes associated with the transitions of the unstable forms into a more stable form. These physical changes are likely to affect adversely the appearance and/or texture of the chocolate. Depending on the process conditions used, cocoa butter can be crystallized into different crystal forms, each of which possess a distinct melting point and density. The purpose of tempering is to produce sufficient, uniform seed crystals to ensure that the temper state is stable and that subsequent crystallisation of the whole of the chocolate mass occurs into the stable crystalline form. Properly tempered chocolate is important for qualities such as mould release (contraction), hardness, snap, mouthfeel, flavour release, gloss and resistance to fat bloom.

Similarly, some fats intended to replace cocoa butter in chocolate-like confectionery need to be tempered for the same reasons.

Crystallisation starters are frequently added to triglyceride fats in order to facilitate tempering of the fats. Modern Technology of Confectionery Industries with Formulae & Processes, Minni Jha, 2003, Asia Pacific Business Press Inc, 8178330997, page 208 describes crystallisation starters as being high melting triglycerides with a melting point of 55 °C to 70 °C, which, when included in a fat in a proportion of 2.5 to 3.0 % aid the tempering procedure. The crystallisation starter forms crystals as the fat is cooled from the molten state and these crystals allow the fat to be produced in the desired polymorphic crystal form.

EP-A-803196 discloses a hard butter additive composition comprising the middle melting point fraction of random interesterified palm stearin. The hard butter additive composition is used to prevent fat blooming and/or graining and improve mold removability of hard butter products such as chocolate or centre cream without a tempering process.

There remains a need for fat compositions that can be used as crystallization starters that can improve the crystallization of fat or fat blends in confectionery or bakery applications without adversely affecting the desirable properties of the fat or fat blends. In particular, there is a need for crystallization starters that are based on non-hydrogenated fats.

According to the present invention, there is provided a fat composition comprising: greater than 70 % by weight palmitic acid; and
from 2 to 12 % by weight P2O triglycerides (i.e., triglycerides having two palmitoyl groups and one oleoyl group, PPO and POP), wherein P is palmitic acid and O is oleic acid;
wherein the fat composition is the stearin fraction of an interesterified palm oil stearin and has a weight ratio of SSO:SOS triglycerides of greater than 0.3, and wherein S is stearic or palmitic acid and O is oleic acid.

Also provided by the invention is a fat blend comprising from 0.5 to 6 % by weight of the fat composition of the invention.

A further aspect of the invention is a process for making the fat composition of the invention comprising the following steps:
(a) fractionating a palm oil to obtain a palm oil stearin having an iodine value (IV) of from 30 to 40;
(b) interesterifying the palm oil stearin of step (a); and
(c) fractionating the interesterified palm oil stearin of step (b) to produce a stearin fraction at a yield based on the interesterified palm oil stearin of step (b) of from 18 to 38 % by weight.

Also provided by the invention in another aspect is a confectionery product comprising:
at least 20% by weight of the fat blend according to the invention; and
at least 30 % by weight sugar.

The invention also provides the use of a fat composition according to the invention to promote, enhance or accelerate the crystallization of fat or fat blends in confectionery or bakery applications.

The fat composition of the invention comprises greater than 70 % by weight palmitic acid. Most if not all of the palmitic acid is present in covalently bonded form in glycerides (i.e., triglycerides and any mono- and di-glycerides that might be present). Preferably, the fat composition of the invention comprises greater than 75 % by weight, more preferably greater than 80 % by weight, such as from 85 % to 95 % by weight, of palmitic acid.

All percentages of fatty acids used herein refer to fatty acids bound as acyl groups in glycerides and are by weight based on total C12 to C24 fatty acids present in the fat composition as acyl groups in glycerides. The levels of fatty acids present in the compositions of the invention can be determined by methods well-known to those skilled in the art such as GC-FAME.

The term fatty acid, as used herein, refers to straight chain saturated or unsaturated (including mono-, di- and poly- unsaturated) carboxylic acids having from 12 to 24 carbon atoms. The term fat refers generally to compositions that contain a mixture of fatty acid glycerides.

The fat composition of the invention typically comprises more than 90 % by weight of triglycerides, more preferably at least 95 % by weight triglycerides.

The fat composition comprises from 2 to 12 % by weight P2O triglycerides (i.e., triglycerides having two palmitoyl groups and one oleoyl group, PPO and POP), wherein P is palmitic acid and O is oleic acid. Preferably, the fat composition comprises from 3 to 12 %, more preferably from 5 to 12 %, even more preferably from 7 to 11 % by weight P2O triglycerides.

The fat composition has a weight ratio of SSO:SOS triglycerides of greater than 0.3, preferably greater than 0.5, even more preferably greater than 0.7, wherein S is stearic or palmitic acid and O is oleic acid. For example SSO includes PPO, PStO, StPO and StStO, where P is palmitic acid and St is stearic acid.

The fat composition of the invention is the stearin fraction of an interesterified palm oil stearin. Interesterification randomises the fatty acid residues in the glycerides. Interesterification may be carried out, for example, chemically using catalysts, such as bases (e.g., sodium methoxide), or enzymatically e.g., using a lipase.

Fractionation of fats and oils into higher and lower melting fractions is a technique that is well-known to those skilled in the art. The lower melting fraction is termed an olein and the higher melting fraction is called a stearin. Fractionation may be carried out in the presence of a solvent (wet), such as acetone, or without a solvent (dry). In particular, the fractionation in (c) of the process of the invention may be carried out by wet fractionation using acetone as solvent, for example.

The fat composition of the invention preferably comprises greater than 55 % by weight of the triglyceride PPP, wherein P is palmitic acid, preferably greater than 58 % by weight, most preferably from 60 to 70 % by weight of PPP.

The fat composition preferably comprises less than 12 % by weight of stearic acid, more preferably less than 10 % by weight, most preferably from 3 to 8 % by weight of stearic acid.

The fat composition of the invention preferably comprises less than 10 % by weight of oleic acid, more preferably from 0.5 to 5 % by weight of oleic acid.

The saturated fatty acid (SAFA) content of the fat composition of the invention is preferably from 90 to 99 % based on fatty acids present.

The physical properties of fats are sometimes defined in terms of N values. These indicate the percentage of solid fat in the composition at a given temperature. Thus, the term Nx refers to solid fat content at a temperature of x °C, measured by NMR pulse techniques. Methods for determining N values are ISO method 8292-1 or AOCS Cd 16b-93. The fat compositions of the invention preferably have an N45 of greater than 80, more preferably greater than 85.

A preferred fat composition of the invention comprises:
from 75 to 95 % by weight palmitic acid;
from 3 to 12 % by weight of stearic acid; and
from 5 to 12 % by weight P2O triglycerides (i.e., triglycerides having two palmitoyl groups and one oleoyl group, PPO and POP), wherein P is palmitic acid and O is oleic acid;
wherein the fat composition has a weight ratio of SSO:SOS triglycerides of greater than 0.3, and wherein S is stearic or palmitic acid and O is oleic acid.

Another preferred fat composition of the invention comprises:
from 75 to 95 % by weight palmitic acid;
from 0.5 to 10 % by weight of oleic acid; and
from 5 to 12 % by weight P2O triglycerides (i.e., triglycerides having two palmitoyl groups and one oleoyl group, PPO and POP), wherein P is palmitic acid and O is oleic acid;
wherein the fat composition has a weight ratio of SSO:SOS triglycerides of greater than 0.3, and wherein S is stearic or palmitic acid and O is oleic acid.

A further preferred fat composition of the invention is a stearin fraction of an interesterified palm oil stearin which comprises:
from 75 to 95 % by weight palmitic acid;
from 0.5 to 10 % by weight of oleic acid and/or from 3 to 12 % by weight of stearic acid; and
from 5 to 12 % by weight P2O triglycerides (i.e., triglycerides having two palmitoyl groups and one oleoyl group, PPO and POP), wherein P is palmitic acid and O is oleic acid;
wherein the fat composition has a weight ratio of SSO:SOS triglycerides of greater than 0.3, and wherein S is stearic or palmitic acid and O is oleic acid

The fat blend of the invention comprises from 0.5 to 6 % by weight of the fat composition of the invention, preferably from 1 to 5 % by weight, such as from 2 to 4 %, or from 2.5 to 3 %, together with one or more other fats as the balance of the fat blend.

The one or more other fats in the fat blend of the invention preferably include lauric fats and/or non-hydrogenated palm fractions.

The fat blend may comprise at least 80% by weight of a lauric fat component. The lauric fat component is preferably selected from the group consisting of coconut oil, palm kernel oil, fractions of coconut oil, fractions of palm kernel oil, and mixtures thereof.

In another embodiment, the fat blend comprises at least 30% by weight of one or more non-hydrogenated palm fractions. Preferably, the non-hydrogenated palm fraction is a palm olein.

A preferred fat blend of the invention comprises:
(i) from 1 to 5 % by weight of a stearin fraction of an interesterified palm oil stearin which comprises:
   from 75 to 95 % by weight palmitic acid;
   from 0.5 to 10 % by weight of oleic acid and/or from 3 to 12 % by weight of stearic acid; and
   from 5 to 12 % by weight P2O triglycerides (i.e., triglycerides having two palmitoyl groups and one oleoyl group, PPO and POP), wherein P is palmitic acid and O is oleic acid;
   wherein the fat composition has a weight ratio of SSO:SOS triglycerides of greater than 0.3, and wherein S is stearic or palmitic acid and O is oleic acid; and
(ii) from 95 to 99 % by weight of one or more other fats selected from lauric fats and/or non-hydrogenated palm fractions.

The fat composition and fat blend of the invention are preferably of vegetable origin. Fats of vegetable origin are obtained directly or indirectly from vegetable sources. The vegetable fats are preferably refined. The term "refined", as used herein, refers to processes in which the purity of a fat is increased by a process which comprises at least the steps of bleaching, followed by filtering and deodorising (such as by steam refining). The fats are typically not hydrogenated.

Since vegetable fats do not contain significant amounts of cholesterol, the fat compositions and fat blends of the invention preferably contain less than 1%, more preferably less than 0.5%, by weight of cholesterol.

Also, since non-hydrogenated vegetable fats do not contain significant amounts of trans- fats, the fat compositions and fat blends of the invention preferably contain less than 1%, more preferably less than 0.5%, by weight of trans fatty acids.

The process for making the fat composition of the invention comprises (a) fractionating a palm oil to obtain a palm oil stearin having an iodine value (IV) of from 30 to 40; (b) interesterifying the palm oil stearin thus obtained; and (c) fractionating the interesterified palm oil stearin of step (b) (preferably by solvent fractionation using acetone as solvent) to produce a stearin fraction at a yield based on the interesterified palm oil stearin of step (b) of from 18 to 38 % by weight. Iodine value may be determined by AOCS Cd 1c-85.

Preferably, step (c) is performed at a temperature of greater than 25 °C.

The fat composition of the invention may be used to promote, enhance or accelerate the crystallization of fat or fat blends in confectionery or bakery applications. In other words, the fat composition may be used as a crystallization starter.

Surprisingly, the fat composition of the invention has been found to have advantages in a confectionery product, such as providing a decrease in the rate of blooming.

The confectionery product of the invention comprises at least 20% by weight of the fat blend according to the invention and at least 30 % by weight sugar.

The confectionery product produced according to the invention is typically a chocolate-like product and may, for example, be selected from bars, fillings, biscuit creams and confectionery coatings. The confectionery products will preferably comprise one or more further ingredients such as skimmed milk powder, cocoa butter, nut based material (e.g., hazelnut pieces and/or hazelnut paste) and emulsifier (e.g., lecithin, PGPR, sorbitan tristearate or a mixture thereof). Further optional components include flavouring (e.g., vanilla, vanillin, mint, orange, etc), colourants and inclusions such as confectionery and fruit pieces.

The confectionery product of the invention comprises sugar. Sugars include, for example, sucrose, glucose, fructose and mixtures thereof. The sugar is typically sucrose. The sugar is preferably powdered. Preferably, the sugar is present in the confectionery product of the invention in an amount of from 30 to 70 % by weight, more preferably from 35 to 55 % by weight, even more preferably from 40 to 50 % by weight, based on the weight of the composition.

The confectionery product of the invention preferably comprises the fat blend in an amount of from 20 to 50 % by weight, such as from 25 to 40 % by weight.

Preferably, the confectionery product comprises at least 5% of milk powder, vegetable milk powder, dairy powder or a mixture thereof. A preferred confectionery product is a confectionery filling comprising at least 5% of a nut based material.

Lecithin is a preferred emulsifier and is preferably present in an amount of up to 1 % by weight of the confectionery product, such as from 0.1 to 1 % by weight.

The confectionery product may comprise cocoa powder, more preferably in an amount of up to 15 % by weight of the confectionery product, such as from 1 to 15 % by weight.

A preferred confectionery product of the invention comprises from 35 to 55 % by weight of sugar and from 25 to 50 % by weight of a fat blend which comprises:
(i) from 1 to 5 % by weight of a stearin fraction of an interesterified palm oil stearin which comprises:
   from 75 to 95 % by weight palmitic acid;
   from 0.5 to 10 % by weight of oleic acid and/or from 3 to 12 % by weight of stearic acid; and
   from 5 to 12 % by weight P2O triglycerides (i.e., triglycerides having two palmitoyl groups and one oleoyl group, PPO and POP), wherein P is palmitic acid and O is oleic acid;
   wherein the fat composition has a weight ratio of SSO:SOS triglycerides of greater than 0.3, and wherein S is stearic or palmitic acid and O is oleic acid; and
(ii) from 95 to 99 % by weight of one or more other fats selected from lauric fats and/or non-hydrogenated palm fractions.

It will be appreciated that the percentage amounts of all of the components in the compositions and products of the invention will add up to 100 %.

Coatings may be applied to confectionery or to a bakery product. Confectionery includes ice cream. The confectionery products may also be used as coatings on products that are sold and/or consumed at ambient temperature (i.e., from 5 to 30 °C).

The confectionery products may be used to apply a partial or complete coating to a base product which is preferably a bakery product. Bakery products are typically baked in an oven. The bakery products are preferably made using flour. Examples of bakery products include biscuits, cookies, cakes, donuts and pastries. Cupcakes are particularly preferred examples of baked confectionery products for the invention.

Coated bakery products can be produced by melting the confectionery product (e.g., above 35 °C), applying it to an uncoated bakery product (e.g., by pouring it onto the uncoated bakery product or by immersing the uncoated bakery product in it) and lowering the temperature to solidify the confectionery product by allowing it to cool (or by forced cooling). Suitable methods are well-known to those skilled in the art.

The coated bakery products may be further decorated with ingredients that adhere to the coating such as icing and/or chocolate strands or chips or sugar strands (which can be of a single colour or multi-coloured).

Confectionery products may also be coated with a composition of the invention. Suitable confectionery products include chocolates, chocolate-like products and jellies.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

### EXAMPLES

### Example 1

Palm oil stearin (IV value 32-34) is interesterified enzymatically and the interesterified palm oil stearin (erPOs) is solvent fractionated to produce a top stearin fraction.

400 gram of enzymatically interesterified palm stearin (erPOs) was solvent fractionated using acetone as solvent. The fractionation was carried out at 29 °C with a solvent to oil ratio of 5 and resulted in 28% (wt) top stearin fraction and 72% (wt) of olein fraction. The solvent/oil mixture was cooled down to 29°C, while stirring. The crystals formed were filtered off and the solvent was evaporated by means of distillation.

The top stearin fraction is suitable for use as a crystallization agent.

### Example 2

Example 1 is repeated but with chemical interesterification of the palm oil stearin IV32-34 to produce chemically interesterified palm oil stearin (inPOs). The top stearin fraction is again suitable for use as a crystallization agent.

### Example 3

The physical characteristics of different (palm oil) stearin fractions and analytical data are given in the following table:

| Component | Example 1 (erPOs stearin) | Example 2 (inPOs stearin) | hPO60 (reference) |
|---|---|---|---|
| US-N20 | 98.5 | 98.3 | 98.6 |
| US-N25 | 98.4 | 98.2 | 98.5 |
| US-N30 | 98.3 | 97.9 | 98.4 |
| US-N35 | 98.0 | 97.2 | 98.2 |
| US-N40 | 97.4 | 96.5 | 97.4 |
| US-N45 | 95.8 | 89.2 | 96.5 |
| MDP | 62.0 | 62.5 | 61.6 |
| C10:0 | * | 0.0 | 0.0 |
| C12:0 | 0.1 | 0.1 | 0.7 |
| C15:0 | 0.1 | 0.1 | 0.1 |
| C14:0 | 1.3 | 1.3 | 1.4 |
| C16:0 | 88.8 | 86.2 | 58.2 |
| C16:1c | 0.0 | 0.0 | * |
| C17:0 | 0.2 | 0.2 | 0.1 |
| C18:0 | 6.9 | 7.1 | 38.7 |
| C18:1 | 1.9 | 3.8 | 0.1 |
| C18:1t | 0.0 | 0.0 | * |
| C18:1c | 1.9 | 3.8 | 0.1 |
| C18:2 | 0.2 | 0.5 | 0.0 |
| C18:2t | 0.0 | 0.0 | * |
| C18:2c | 0.2 | 0.5 | 0.0 |
| C18:3 | 0.0 | 0.0 | 0.0 |
| C18:t | * | * | * |
| C18:3c | * | 0.0 | * |
| C20:0 | 0.5 | 0.5 | 0.5 |
| C20:1c | 0.0 | 0.0 | * |
| C20:2c | 0.0 | 0.0 | * |
| C22:0 | 0.1 | 0.1 | 0.1 |
| C22:1 | 0.0 | 0.0 | 0.0 |
| C24:0 | 0.1 | 0.1 | 0.1 |
| SAFA | 97.9 | 95.6 | 99.9 |
| MUFA | 1.9 | 3.8 | 0.1 |
| PUFA | 0.2 | 0.6 | 0.0 |
| IVFAME | 2.0 | 4.3 | 0.1 |
| TTrans | 0.0 | 0.1 | 0.0 |
| MPP | 3.7 | 3.7 | 2.0 |
| PPP | 66.7 | 68.4 | 26.3 |
| MOP | 0.7 | 0.2 | * |
| MLP | 0.2 | 0.0 | 0.2 |
| PPSt | 13.9 | 13.9 | 40.5 |
| POP | 8.1 | 7.3 | 0.1 |
| PLP | 1.3 | 1.0 | 0.0 |
| PStSt | 1.7 | 1.6 | 24.4 |
| POSt | 0.7 | 0.8 | 0.0 |
| POO | 0.4 | 0.3 | 0.0 |
| PLSt | 0.1 | 0.2 | 0.1 |
| PLO | 0.1 | 0.1 | 0.0 |
| StStSt | 0.3 | 0.3 | 5.6 |
| StOSt | 0.7 | 1.1 | 0.4 |
| StOO | 0.2 | 0.1 | * |
| StLSt | 0.1 | 0.0 | * |
| OOO | 0.1 | * | 0.0 |
| StLO | * | 0.1 | * |
| StLL | 0.0 | * | * |
| OLL | 0.0 | 0.2 | 0.3 |
| AStSt | * | * | * |
| AOSt | 0.1 | 0.0 | * |
| DIV | 0.5 | 0.7 | 0.1 |
| SUMSOS | 9.5 | 9.2 | 0.2 |

| | | | |
|---|---|---|---|
| US-Nx refers to solid fat content determined by NMR on unstabilised fat at x °C MDP is the Mettler dropping point IVFAME refers to calculated iodine value Cx:y refers to a fatty acid having x carbon atoms and y double bonds; c refers to cis fatty acids and t to trans fatty acids; levels determined by GC-FAME Ttrans means total trans Triglyceride composition MPP, etc, was determined by GC (ISO 23275) DIV means undefined triglycerides SUMSOS refers to total SOS (S is stearic or palmitic acid and O is oleic acid) | | | |

The composition is also summarized in the following table:

| | C16:0 (measured by GC FAME) | PPP measured by GC (ISO 23275) (P is palmitic acid) | P2O measured by GC (ISO 23275) (P is palmitic acid and O is oleic acid) | SOS measured by silver phase (S is saturated fatty acids and O is oleic acid) | SSO measured by silver phase (S is saturated fatty acids and O is oleic acid) |
|---|---|---|---|---|---|
| Example 1 erPOs Stearin | 89 | 68 | 8.1 | * | * |
| Example 2 inPOs Stearin | 86 | 67 | 7.3 | 5.7 | 8.8 |
| Reference hPO60 | 58 | 26 | n.d. | n.d. | n.d. |

| | | | | | |
|---|---|---|---|---|---|
| P2O means combined POP and PPO n.d. means not detectable *amounts and ratios of the same order as Example 2 | | | | | |

### Example 4

The following three confectionery recipes were prepared for evaluating the properties of a fat blend with Reference hPO60 compared to a fat blend with the crystallization starter of the invention (Example 2).

| Recipe 1 | Recipe 2 | Recipe 3 |
|---|---|---|
| | | |
| Sugar 49% | Sugar 48% | Sugar 43% |
| Fat (Palm olein IV 64) 26% | Fat (Palm kernel stearin) 31% | Fat (Palm mid fraction) 33% |
| Hazelnut paste 15% | Cocoa powder DR74 7% | Hazelnuts 15% |
| Skimmed Milk powder 7% | Cocoa powder NE 7% | Cocoa powder 5% |
| Cocoa powder DR74 3% | Skimmed milk powder 7% | Skimmed milk powder 4% |
| Lecithin 0.4% | Lecithin 0.4% | Lecithin 0.4% |

The amounts used of crystallization starter of Example 2 in % by weight based on total fat blend were as follows:

| Material | Crystallization starter [wt%] of Example 2 | Crystallization starter [wt%] Reference hPO60 |
|---|---|---|
| Fat blend in Recipe 1 | 4 | 4 |
| Fat blend in Recipe 2 | 4 | 4 |
| Fat blend in Recipe 3 | 1 | 1 |

### Example 5

### Results of application tests:

An internally qualified panel visually evaluated the coating application (Recipe 2) using either the fat of Recipe 2 with hPO60 or with inPOs stearin (Example 2)

| Storage | Fat of Recipe 2 with hPO60 | | | Fat of Recipe 2 with (inPOs stearin) Example 2 | | |
|---|---|---|---|---|---|---|
| storage temp (°C) | 15 | 20 | 25 | 15 | 20 | 25 |
| 1 day | 1C | 1C | 1C extreme | 4/5 A | 4/5 A | 4/5 A |
| 1 week | 1C | 1C extreme | 1C extreme | 4/5 A | 4/5 A | 4/5 A |
| 1 month | 1C | 1C extreme | 1C extreme | 4/5 A | 4/5 A | 4/5 A |
| 2 months | 1c | 1C extreme | 1C extreme | 4/5 A | 4/5 A | 4/5 A |
| 3 months | 1c | 1C extreme | 1C extreme | 4/5B | 4/5 A | 4 A |
| 6 months | 1c | 1C extreme | 1C extreme | 4/5B | 4/5 A | 4 A |

| | | | | | | |
|---|---|---|---|---|---|---|
| A = no bloom B = beginning of bloom C = much bloom 1 = no gloss 2 = little gloss 3 = gloss 4 = a lot of gloss 5 = very much gloss | | | | | | |

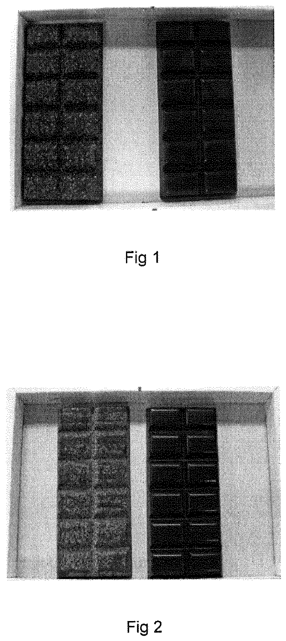

Figure 1 shows a comparison of chocolate-like products prepared using hPO60 (fully hydrogenated palm oil having an IV of 60 before hydrogenation) (left hand side of the figure) and the composition of the invention (right hand side of the figure) after 2 days at 25 C.
Figure 2 shows the same products as shown in Figure 1 after 6 months at 20 °C.

## Claims

1. A fat composition comprising:
greater than 70 % by weight palmitic acid; and
from 2 to 12 % by weight P2O triglycerides, wherein P is palmitic acid and O is oleic acid;
wherein the fat composition is the stearin fraction of an interesterified palm oil stearin and has a weight ratio of SSO:SOS triglycerides of greater than 0.3, and wherein S is stearic or palmitic acid and O is oleic acid.

2. Fat composition as claimed in Claim 1 comprising greater than 55 % by weight of the triglyceride PPP, wherein P is palmitic acid, preferably greater than 58 % by weight, most preferably from 60 to 70 % by weight.

3. Fat composition as claimed in Claim 1 or Claim 2 comprising less than 12 % by weight of stearic acid, more preferably less than 10 % by weight, most preferably from 3 to 8 % by weight.

4. Fat composition as claimed in any one of the preceding claims comprising less than 10 % by weight of oleic acid.

5. A fat blend comprising from 0.5 to 6 % by weight of the fat composition of any one of Claims 1 to 4 and from 94 to 99.5 % by weight of one or more other fats.

6. Fat blend as claimed in Claim 5 comprising at least 80% by weight of a lauric fat component.

7. Fat blend as claimed in Claim 6, wherein the lauric fat component is selected from the group consisting of coconut oil, palm kernel oil, fractions of coconut oil, fractions of palm kernel oil, and mixtures thereof.

8. Fat blend as claimed in Claim 5 comprising at least 30% by weight of one or more non-hydrogenated palm fractions.

9. Fat blend as claimed in Claim 8, wherein the non-hydrogenated palm fraction is a palm olein.

10. A process for making the fat composition of any one of Claims 1 to 4 comprising the following steps:
(a) fractionating a palm oil to obtain a palm oil stearin having an iodine value (IV) of from 30 to 40;
(b) interesterifying the palm oil stearin of step (a); and
(c) fractionating the interesterified palm oil stearin of step (b) to produce a stearin fraction at a yield based on the interesterified palm oil stearin of step (b) of from 18 to 38 % by weight.

11. Process as claimed in Claim 10, wherein step (c) is performed at a temperature of greater than 25 °C.

12. A confectionery product comprising:
at least 20% by weight of the fat blend according to any one of Claims 5 to 9;
and
at least 30 % by weight sugar.

13. Confectionery product as claimed in Claim 12 comprising at least 5% of milk powder, vegetable milk powder, dairy powder or a mixture thereof.

14. Confectionery product as claimed in Claim 12 or Claim 13 which is a confectionery filling comprising at least 5% of a nut based material.

15. Use of a fat composition according to any one of Claims 1 to 4 to promote, enhance or accelerate the crystallization of fat or fat blends in confectionery or bakery applications.

16. Process for forming the fat blend of any one of Claims 5 to 9 which comprises blending the fat composition of any one of Claims 1 to 4 with the one or more other fats.

## Patentansprüche

1. Fettzusammensetzung, Folgendes umfassend:
über 70 Gew.-% Palmitinsäure; und
2 bis 12 Gew.-% P2O-Triglyceride, wobei P Palmitinsäure und O Oleinsäure ist;
wobei die Fettzusammensetzung der Stearinanteil eines umgeesterten Palmölstearins ist und ein Gewichtsverhältnis von SSO:SOS-Triglyceriden über 0,3 hat und wobei S Stearin- oder Palmitinsäure und O Oleinsäure ist.

2. Fettzusammensetzung nach Anspruch 1, umfassend über 55 Gew.-% des Triglycerids PPP, wobei P Palmitinsäure ist, bevorzugt über 58 Gew.-%, am stärksten bevorzugt 60 bis 70 Gew.-%.

3. Fettzusammensetzung nach Anspruch 1 oder 2, weniger als 12 Gew.-% Stearinsäure, stärker bevorzugt weniger als 10 Gew.-%, am stärksten bevorzugt 3 bis 8 Gew.-% umfassend.

4. Fettzusammensetzung nach einem der vorangehenden Ansprüche, weniger als 10 Gew.-% Oleinsäure umfassend.

5. Fettmischung, 0,5 bis 6 Gew.-% der Fettzusammensetzung nach einem der Ansprüche 1 bis 4 und 94 bis 99,5 Gew.-% eines oder mehrerer anderer Fette umfassend.

6. Fettmischung nach Anspruch 5, wenigstens 80 Gew.-% einer Laurinfettkomponente umfassend.

7. Fettmischung nach Anspruch 6, wobei die Laurinfettkomponente aus der Gruppe ausgewählt ist, die aus Kokosnussöl, Palmkernöl, Kokosnussölanteilen, Palmkernölanteilen und deren Mischungen besteht.

8. Fettmischung nach Anspruch 5, wenigstens 30 Gew.-% eines oder mehrerer ungehärteter Palmanteile umfassend.

9. Fettmischung nach Anspruch 8, wobei der ungehärtete Palmanteil ein Palmolein ist.

10. Vorgang zum Herstellen der Fettzusammensetzung nach einem der Ansprüche 1 bis 4, folgende Schritte umfassend:
(a) Fraktionieren eines Palmöls zum Erhalten eines Palmölstearins, das eine lodzahl (*iodine value* - IV) von 30 bis 40 hat;
(b) Umestern des Palmölstearins von Schritt (a); und
(c) Fraktionieren des umgeesterten Palmölstearins von Schritt (b) zum Produzieren eines Stearinanteils zu einem Ertrag basierend auf dem umgeesterten Palmölstearin von Schritt (b) von 18 bis 38 Gew.-%.

11. Vorgang aus Anspruch 10, wobei Schritt (c) bei einer Temperatur über 25 °C durchgeführt wird.

12. Süßwarenprodukt, Folgendes umfassend:
wenigstens 20 Gew.-% der Fettmischung nach einem der Ansprüche 5 bis 9;
und
wenigstens 30 Gew.-% Zucker.

13. Süßwarenprodukt nach Anspruch 12, wenigstens 5 Gew.-% Milchpulver, pflanzliches Milchpulver, Molkereipulver oder deren Mischung umfassend.

14. Süßwarenprodukt nach Anspruch 12 oder 13, welches eine Süßwarenfüllung ist, wenigstens 5 Gew.-% einer Zutat auf Nussbasis umfassend.

15. Gebrauch einer Fettzusammensetzung nach einem der Ansprüche 1 bis 4 zum Fördern, Steigern oder Beschleunigen der Kristallisierung von Fett oder Fettmischungen in Süßwaren- oder Bäckereianwendungen.

16. Vorgang zum Ausbilden der Fettmischung nach einem der Ansprüche 5 bis 9, der das Mischen der Fettzusammensetzung nach einem der Ansprüche 1 bis 4 mit einem oder mehreren anderen Fetten umfasst.

## Revendications

1. Composition de matières grasses comprenant :
plus de 70 % en poids d'acide palmitique ; et
de 2 à 12 % en poids de triglycérides P2O, dans laquelle P est l'acide palmitique et O est l'acide oléique ;
dans laquelle la composition de matières grasses est la fraction stéarine d'une stéarine d'huile de palme interestérifiée et a un rapport pondéral de triglycérides SSO/SOS supérieur à 0,3, et dans laquelle S est l'acide stéarique ou palmitique et O est l'acide oléique.

2. Composition de matières grasses selon la revendication 1 comprenant plus de 55 % en poids du triglycéride PPP, dans laquelle P est l'acide palmitique, de préférence plus de 58 % en poids, le plus préférablement de 60 à 70 % en poids.

3. Composition de matières grasses selon la revendication 1 ou la revendication 2 comprenant moins de 12 % en poids d'acide stéarique, plus préférablement moins de 10 % en poids, le plus préférablement de 3 à 8 % en poids.

4. Composition de matières grasses selon l'une quelconque des revendications précédentes comprenant moins de 10 % en poids d'acide oléique.

5. Mélange de matières grasses comprenant de 0,5 à 6 % en poids de la composition de matières grasses selon l'une quelconque des revendications 1 à 4 et de 94 à 99,5 % en poids d'une ou plusieurs autres matières grasses.

6. Mélange de matières grasses selon la revendication 5 comprenant au moins 80 % en poids d'une composante de matière grasse laurique.

7. Composition de matières grasses selon la revendication 6, dans laquelle la composante de matière grasse laurique est sélectionnée dans le groupe constitué par l'huile de noix de coco, l'huile de palmiste, des fractions d'huile de noix de coco, des fractions d'huile de palmiste et les mélanges de celles-ci.

8. Mélange de matières grasses selon la revendication 5 comprenant au moins 30 % en poids d'une ou plusieurs fractions de palme non hydrogénées.

9. Mélange de matières grasses selon la revendication 8, dans lequel la fraction de palme non hydrogénée est une oléine de palme.

10. Procédé de fabrication d'une composition de matières grasses selon l'une quelconque des revendications 1 à 4 comprenant les étapes suivantes :
(a) fractionner une huile de palme pour obtenir une stéarine d'huile de palme ayant un indice d'iode (*iodine value* - IV) de 30 à 40 ;
(b) interestérifier la stéarine d'huile de palme de l'étape (a) ; et
(c) fractionner la stéarine d'huile de palme interestérifiée de l'étape (b) pour produire une fraction stéarine avec un rendement sur la base de la stéarine d'huile de palme interestérifiée de l'étape (b) de 18 à 38 % en poids.

11. Procédé selon la revendication 10, dans lequel l'étape (c) est réalisée à une température supérieure à 25 °C.

12. Produit de confiserie comprenant :
au moins 20 % en poids du mélange de matières grasses selon l'une quelconque des revendications 5 à 9 ;
et
au moins 30 % en poids de sucre.

13. Produit de confiserie selon la revendication 12 comprenant au moins 5 % de lait en poudre, de lait végétal en poudre, de produit laitier en poudre ou d'un mélange de ceux-ci.

14. Produit de confiserie selon la revendication 12 ou la revendication 13 qui est une garniture de confiserie comprenant au moins 5 % d'une matière à base de noix.

15. Utilisation d'une composition de matières grasses selon l'une quelconque des revendications 1 à 4 pour faciliter, améliorer ou accélérer la cristallisation de matière grasse ou de mélanges de matières grasses dans des applications de confiserie ou de boulangerie.

16. Procédé de formation du mélange de matières grasses selon l'une quelconque des revendications 5 à 9 qui comprend le mélange de la composition de matières grasses selon l'une quelconque des revendications 1 à 4 avec les une ou plusieurs autres matières grasses.
